# EUROPÄISCHE PATENTSCHRIFT

(11) **EP 1 811 187 B1**
(45) Veröffentlichungstag und Bekanntmachung des Hinweises auf die Patenterteilung: **07.09.2011**
(21) Anmeldenummer: 06009108.9
(22) Anmeldetag: 03.05.2006
(51) Int. Cl.: F16B 5/06, F16B 12/24

(54) **Verbindungszapfen**
Coupling element
Tenon d'assemblage

(30) Priorität: 18.01.2006 DE 202006000691 U
(43) Veröffentlichungstag der Anmeldung: 25.07.2007
(73) Patentinhaber: Festool GmbH, 73240 Wendlingen (DE)
(72) Erfinder: Reines, Wolfgang, 72655 Altdorf (DE); Schmid, Jürgen, 88682 Salem (DE)
(74) Vertreter: Bregenzer, Michael

(56) Entgegenhaltungen:
- DE-A1- 2 243 564
- DE-U1- 8 905 304
- DE-U1-202004 004 696
- US-A- 3 674 068

## Beschreibung

Die Erfindung betrifft einen Verbindungszapfen zum Herstellen einer Zapfenverbindung zwischen zwei Werkstücken, beispielsweise zwei rechtwinklig zueinander stehende Plattenteile, wobei der Verbindungszapfen im Querschnitt eine längliche Gestalt mit parallel zueinander angeordneten Breitseiten und so konturierten Schmalseiten aufweist, dass er in Zapfenlöcher der Werkstücke mit einer länglichen, parallel zueinander angeordnete Breitseiten und halbkreisförmige Endabschnitte aufweisenden Querschnittsgestalt einsteckbar ist.

Derartige Verbindungszapfen - auch Dübel genannt - werden beispielsweise im Möbelbau verwendet. Dabei ist ein Verbindungszapfen der genannten Art aus der DE 20 2004 004 696 U1 bekannt. Er weist entsprechend der Gestalt der Zapfenlöcher planparallele Breitseiten und halbkreisförmige Schmalseiten auf, so dass er in die Zapfenlöcher passt.

Ein solcher Verbindungszapfen weist gegenüber den ansonsten üblichen Verbindungszapfen mit im Wesentlichen kreiszylindrischer Gestalt mehrere Vorteile auf. So entfällt beispielsweise bei einer nur von einem einzigen Verbindungszapfen gebildeten Verbindung das Fixieren der beiden Werkstücke bis zum Aushärten eines die Verleimung bewirkenden Leims oder dergleichen Verbindungsmittels, da sich der Verbindungszapfen und die Werkstücke nicht relativ zueinander verdrehen können. Ferner weisen die Verbindungszapfen aufgrund ihrer Querschnittslänge auch bei schmaler Ausführung eine ausreichende Stabilität auf, so dass sie mit Bezug auf kreiszylindrische Zapfen schmäler ausgebildet werden können und zum Verbinden entsprechen schmalwandiger Werkstücke geeignet sind.

Ausgehend hiervon liegt der vorliegenden Erfindung die Aufgabe zugrunde, einen Verbindungszapfen der eingangs genannten Art zu schaffen, der unter Beibehaltung der Vorteile des genannten Standes der Technik besonders stabil und dabei zentriert in den Zapfenlöchern hält.

Diese Aufgabe wird erfindungsgemäß dadurch gelöst, dass der Verbindungszapfen an mindestens einer seiner beiden Schmalseiten mindestens eine sich in Zapfen-Längsrichtung erstreckende Längsrippe aufweist, die im Querschnitt gesehen über eine gedachte, die beiden Zapfen-Breitseiten verbindende Halbkreislinie nach radial außen hin vorsteht, derart, dass die mindestens eine Längsrippe beim Eintreiben des Verbindungszapfens in das jeweilige Zapfenloch unter Verformung der mindestens einen Längsrippe in den betreffenden halbkreisförmigen Endabschnitt des Zapfenloches eingepresst wird.

Auf diese Weise erhält man einen gegenüber dem Verbindungszapfen gemäß der DE 20 2004 004 696 U1 im Querschnitt um den Überstand der mindestens einen Längsrippe längeren Verbindungszapfen, so dass die Querschnittslänge auch größer als die zugeordneten Zapfenlöcher ist. Aufgrund des dadurch bedingten Verformens und Zusammenpressens der jeweiligen Längsrippe beim Eintreiben ergibt sich ein unverrückbar fester, wackelfreier und somit zentrierter Zusammenhalt des Verbindungszapfens mit den Werkstücken. Der Zusammenhalt kann so fest sein, dass sich je nach den mechanischen Belastungen der Zapfenverbindung ein Verleimen oder dergleichen erübrigt.

Die erfindungsgemäß vorgesehene mindestens eine Längsrippe lässt sich bei der Herstellung ohne weiteres anformen, so dass kein zusätzlicher Aufwand entsteht.

Zweckmäßigerweise ist an beiden Schmalseiten des Verbindungszapfens jeweils mindestens eine Längsrippe angeordnet. Ferner ist vorgesehen, dass die mindestens eine Längsrippe eine zur mittig zwischen den beiden Breitseiten des Verbindungszapfens verlaufenden Mittelebene des Verbindungszapfens spiegelsymmetrische Längsrippenanordnung bildet.

Prinzipiell könnten an der betreffenden Schmalseite mehr als eine radial vorstehende Längsrippe vorhanden sein. Zweckmäßigerweise ist jedoch nur eine mittig angeordnete Längsrippe vorgesehen.

Sieht man von der mindestens einen Längsrippe ab, weisen die Schmalseiten des Verbindungszapfens im Querschnitt gesehen zweckmäßigerweise eine der genannten Halbkreislinie im Wesentlichen entsprechende Hüllkontur auf, so dass der Verbindungszapfen mit Ausnahme an der mindestens einen Längsrippe unter Anlage an die Wandung der Zapfenlöcher in diese passt.

Desweiteren kann der Verbindungszapfen an seinen Schmalseiten und/oder Breitseiten Vertiefungen zur Aufnahme von Leim oder dergleichen Verbindungsmittel aufweisen.

Weitere zweckmäßige Ausgestaltungen sind den Unteransprüchen und der folgenden Beschreibung eines aus der Zeichnung hervorgehenden Ausführungsbeispiels der Erfindung zu entnehmen. In der Zeichnung zeigen:
- Figur 1: zwei Werkstücke in Gestalt von rechtwinkelig zueinander stehenden Plattenteilen, die mit Hilfe von Verbindungszapfen gemäß den Figuren 2 und 3 miteinander verbunden werden sollen, im voneinander getrennten Zustand in Schrägansicht, so dass die Zapfenlöcher sichtbar sind,
- Figur 2: einen erfindungsgemäßen Verbindungszapfen in schematischer Seitenansicht gemäß Pfeil II auf eine seiner Breitseiten und
- Figur 3: den Verbindungszapfen nach Figur 2 in Stirnansicht gemäß Pfeil III in vergrößerter Darstellung.

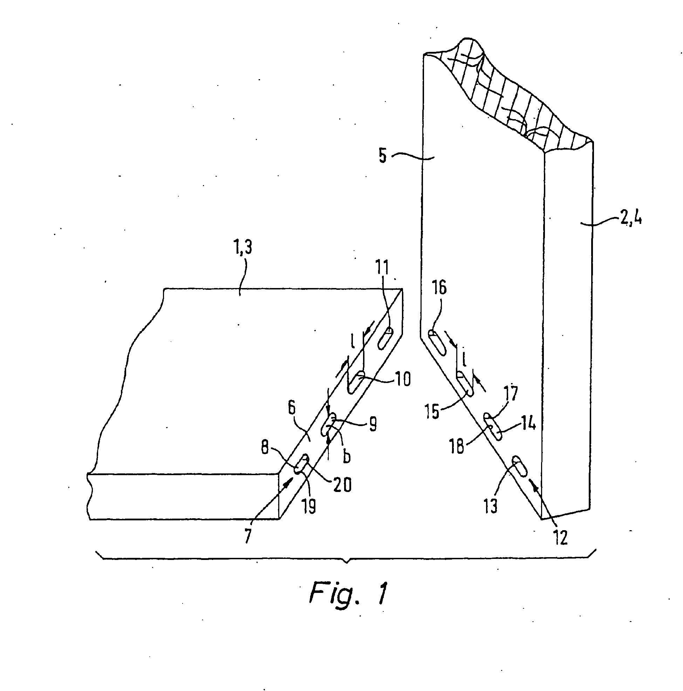

Aus Figur 1 gehen zwei Werkstücke 1, 2 hervor, die jeweils von einem aus Holz, holzartigem Material, Kunststoffmaterial und/oder einem sonstigen Holzersatzwerkstoff bestehenden Plattenteil 3, 4 gebildet werden. Das bevorzugte Einsatzgebiet des noch zu beschreibenden Verbindungszapfens ist der Möbelbau, so dass es sich bei den beiden Plattenteilen 3, 4 beispielsweise um zwei Möbelwände oder eine Möbelwand und ein Fachbrett handelt. Die beiden Plattenteile 3,4 sollen in rechtwinkelig zueinander stehender Lage fest miteinander verbunden werden. Hierzu weist das eine Plattenteil 3 an seiner gegen die Wandfläche 5 des anderen Plattenteils 4 zu stoßenden Stirnseite 6 eine Reihe 7 von Zapfenlöchern 8, 9, 10, 11 und das andere Plattenteil 4 an seiner Wandfläche 5 eine Reihe 12 von Zapfenlöchern 13, 14, 15, 16 auf, wobei die Zapfenlöcher der beiden Plattenteile 3, 4 einander paarweise zugeordnet sind, so dass die Zapfenlöcher 8, 13 bzw. 9, 14 bzw. 10, 15 bzw. 11, 16 jeweils ein Zapfenpaar bilden.

Die Zapfenlöcher 8 bis 11 und 13 bis 16 weisen eine längliche Querschnittsgestalt (diese entspricht den aus Figur 1 ersichtlichen Stirnansichten der Zapfenlöcher) mit im Abstand der Lochbreite b planparallel zueinander verlaufenden Breitseiten 17, 18 und haltkreisförmigen Endabschnitten 19, 20 auf, so dass sich einschließlich der Endabschnitte 19, 20 eine Querschnittslänge 1 ergibt.

Diese Zapfenlöcher 8 bis 11 und 13 bis 16 lassen sich durch Fräsen herstellen.

Jedem Zapfenlochpaar 8, 13 bzw. 9, 14 bzw. 10, 15 bzw. 11, 16 ist ein Verbindungszapfen 21 zum Herstellen einer Zapfenverbindung zwischen den beiden Werkstücken 1, 2 zugeordnet, der ein gesondertes Herstellungsteil insbesondere aus Holz oder holzartigem Material ist, prinzipiell jedoch auch aus Kunststoff bestehen kann. Der Verbindungszapfen 21 wird in die beiden Zapfenlöcher des betreffenden Zapfenlochpaares gesteckt und eingeleimt. Dabei kann man in der Praxis so vorgehen, dass man zunächst in die Zapfenlöcher beispielsweise des Plattenteils 3 jeweils einen Zapfen 21 einleimt, wobei der eingeleimte Zapfen 21 aus dem betreffenden Zapfenloch vorsteht, wonach das andere Plattenteil 4 mit seinem Zapfenlöcher unter vorherigem Aufbringen von Leim oder dergleichen auf die aus dem Plattenteil 3 vorstehenden Zapfenbereiche aufgesteckt wird.

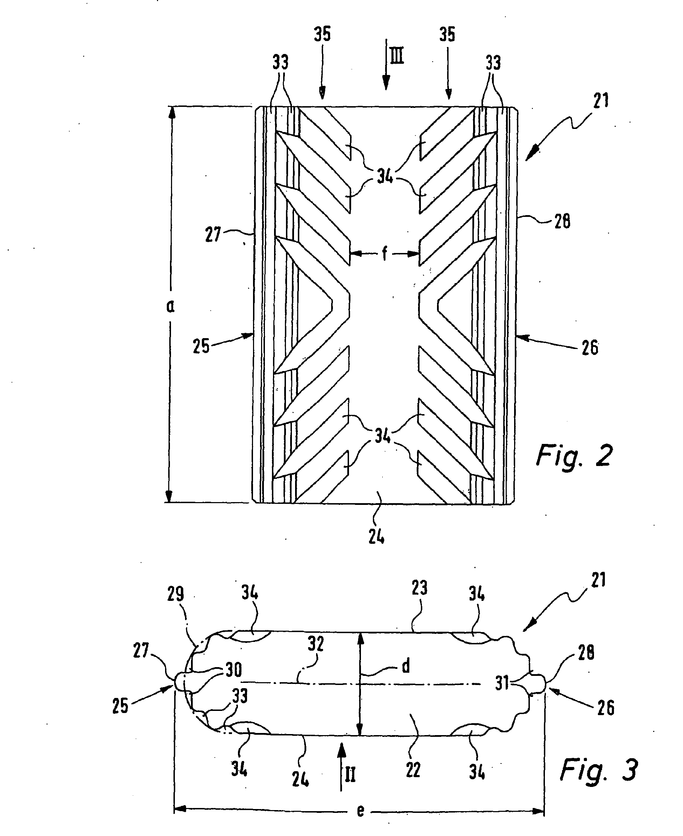

Der Verbindungszapfen 21 weist über seine der Einsteckrichtung entsprechende Zapfenlänge a hinweg einen - sieht man von den noch zu beschreibenden Vertiefungen zur Aufnahme des Leims ab - im Wesentlichen gleichbleibenden Querschnitt auf. Diese Querschnittsgestalt entspricht der aus Figur 3 hervorgehenden Gestalt der Zapfen-Stirnseite 22. Der Verbindungszapfen 21 weist im Querschnitt eine längliche Gestalt mit parallel zueinander angeordneten Breitseiten 23, 24 und so konturierten Schmalseiten 25, 26 auf, dass er in die betreffenden Zapfenlöcher der Plattenteile 3, 4 eingesteckt werden kann. Die Zapfendicke d, das heißt der Abstand der Zapfen-Breitseiten 17, 18 voneinander, entspricht der Lochbreite b der Zapfenlöcher. Die quer zur Zapfendicke d gemessene Querschnittslänge e des Zapfens 21 ist im Neuzustand dagegen größer als die gleich gerichtete Querschnittslänge 1 der Zapfenlöcher.

Dabei ist die Anordnung so getroffen, dass der dargestellte Verbindungszapfen 21 an seinen beiden Schmalseiten 25, 26 jeweils eine sich in Zapfenlängsrichtung a erstreckende Längsrippe 27, 28 aufweist, die im Querschnitt gesehen über eine gedachte, die beiden Zapfen-Breitseiten 23, 24 verbindende, in Figur 3 strichpunktiert eingezeichnete Halbkreislinie 29 nach radial außen hin vorsteht. Die Lage der Halbkreislinie 29 wird dadurch definiert, dass ihre beiden Enden an den zugewandten Enden der beiden planen Zapfen-Breitseiten 23, 24 angeordnet sind. Die der Halbkreislinie 29 entsprechende Halbkreislinie an der entgegengesetzten Schmalseite 26 wurde der Übersichtlichkeit wegen nicht eingezeichnet.

Die Querschnittslänge e des Zapfens 21 ist im Wesentlichen um den Überstand der beiden Längsrippen 27, 28 über die beiden Halbkreislinien 29 größer als die Querschnittslänge 1 der Zapfenlöcher.

Die Halbkreislinie 29 entspricht dem halbkreisförmigen Endabschnitt 19, 20 der Zapfenlöcher, so dass der Zapfen 21, wären die vorstehenden Längsrippen 27, 28 nicht vorhanden, wie beim Stande der Technik gemäß der DE 20 2004 004 696 U1 in die Zapfenlöcher eingesteckt werden könnte.

Die vorstehenden Längsrippen 27, 28 erfordern dagegen ein Einpressen in die Endabschnitte 19, 20 der betreffenden Zapfenlöcher. Bei diesem Einpressen werden die aus entsprechend verformbarem Material bestehenden Längsrippen 27, 28 nach innen gedrückt. In diesem Zusammenhang ist vorgesehen, dass den Längsrippen 27, 28 eine mit Bezug auf die Halbkreislinie 29 zurückgesetzte Längsrinnenanordnung 30, 31 benachbart ist, in die das beim Eintreiben des Zapfens 21 in das betreffende Zapfenloch verdrängt Längsrippenmaterial ausweichen kann.

Um das Einführen des Zapfens 21 in die Zapfenlöcher zu erleichtern, kann der Zapfen 21 an seinen Stirnseiten zumindest im Bereich der Längsrippen 27, 28 angefast sein.

Beim dargestellten Ausführungsbeispiel ist an den beiden Schmalseiten 25, 26 des Zapfens 21 jeweils eine einzige Längsrippe 27, 28 vorhanden. Prinzipiell könnten jedoch auch mehrere parallel zueinander verlaufende, radial vorstehende Längsrippen vorgesehen sein. In jedem Falle ist es zweckmä-βig, dass die mindestens eine Längsrippe eine zur mittig zwischen den beiden Breitseiten 23, 24 des Verbindungszapfens 21 verlaufenden Mittelebene 32 des Verbindungszapfens 21 spielsymmetrische Längsrippenanordnung bildet. Ist, wie beim Ausführungsbeispiel, an der jeweiligen Schmalseite 25, 26 nur eine einzige Längsrippe 27 bzw. 28 vorhanden, sollte diese mittig, das heißt in der Mittelebene 32, angeordnet sein.

Ferner wird noch darauf hingewiesen, dass prinzipiell nur eine der beiden Schmalseiten des Verbindungszapfens 21 mit mindestens einer vorstehenden Längsrippe 27 bzw. 28 versehen sein muss.

Aus Figur 3 geht schließlich noch hervor, dass die Zapfen-Schmalseiten 25, 26 im Querschnitt gesehen mit Ausnahme an den Längsrippen 27, 28 eine der Halbkreislinie 29 im Wesentlichen entsprechende Hüllkontur aufweisen, das heißt die Halbkreislinie 29 bildet sozusagen die Hüllkurve für die jeweilige Zapfen-Schmalseite 25, 26.

Der Verbindungszapfen 21 kann ganz allgemein an seinen Schmalseiten 25, 26 und/oder an seinen Breitseiten 23, 24 Vertiefungen zur Aufnahme von Leim oder dergleichen Verbindungsmittel aufweisen. Der Leim oder dergleichen wird vor dem Eintreiben des Verbindungszapfens in das jeweilige Zapfenloch angebracht. Diese Vertiefungen können von in Zapfen-Längsrichtung a verlaufenden, rinnenartigen Längsvertiefungen 33, wie sie beim Ausführungsbeispiel an den Zapfen-Schmalseiten 25, 26 vorhanden sind, oder von schräg zur Zapfen-Längsrichtung a verlaufenden, kanalartigen Schrägvertiefungen 34 an den Zapfen-Breitseiten 23, 24 gebildet werden. Aus Figur 3 ist ersichtlich, dass die Schrägvertiefungen 34 in die Längsvertiefungen 33 münden können.

An jeder Breitseite 23, 24 sind zwei mit Abstand zueinander angeordnete Reihen 35, 36 von in Zapfen-Längsrichtung a mit Abstand aufeinanderfolgenden Schrägvertiefungen 34 vorhanden. Dabei ist jede Reihe 35, 36 in zwei in Zapfen-Längsrichtung a aufeinanderfolgende Halbreihen mit entgegengesetzter Neigungsrichtung der Schrägvertiefungen 34 unterteilt.

## Patentansprüche

1. Verbindungszapfen zum Herstellen einer Zapfenverbindung zwischen zwei Werkstücken, beispielsweise zwei rechtwinkelig zueinander stehende Plattenteile, wobei der Verbindungszapfen im Querschnitt eine längliche Gestalt mit parallel zueinander angeordneten Breitseiten und so konturierten Schmalseiten aufweist, dass er in Zapfenlöcher der Werkstücke mit einer länglichen, parallel zueinander angeordnete Breitseiten und halbkreisförmige Endabschnitte aufweisenden Querschnittsgestalt einsteckbar ist, **dadurch gekennzeichnet, dass** der Verbindungszapfen (21) an mindestens einer seiner beiden Schmalseiten (25, 26) mindestens eine sich in Zapfen-Längsrichtung (a) erstreckende Längsrippe (27, 28) aufweist, die im Querschnitt gesehen über eine gedachte, die beiden Zapfen-Breitseiten (23, 24) verbindende Halbkreislinie (29) nach radial außen hin vorsteht, derart, dass die mindestens eine Längsrippe (27, 28) beim Eintreiben des Verbindungszapfens (21) in das jeweilige Zapfenloch (8 bis 11, 13 bis 16) unter Verformung der mindestens einen Längsrippe (27, 28) in den betreffenden halbkreisförmigen Endabschnitt (19, 20) des Zapfenlochs eingepresst wird.

2. Verbindungszapfen nach Anspruch 1, **dadurch gekennzeichnet, dass** an beiden Schmalseiten (25, 26) des Verbindungszapfens (21) jeweils mindestens eine Längsrippe (27, 28) angeordnet ist.

3. Verbindungszapfen nach Anspruch 1 oder 2, **dadurch gekennzeichnet, dass** die mindestens eine Längsrippe (27, 28) eine zur mittig zwischen den beiden Breitseiten (23, 24) des Verbindungszapfens (21) verlaufenden Mittelebene (32) des Verbindungszapfens (21) spiegelsymmetrische Längsrippenanordnung bildet.

4. Verbindungszapfen nach Anspruch 3, **dadurch gekennzeichnet, dass** an mindestens einer der beiden Schmalseiten (25, 26) des Verbindungszapfens (21), zweckmäßigerweise an beiden Schmalseiten, eine mittig angeordnete Längsrippe (27, 28) vorhanden ist.

5. Verbindungszapfen nach einem der Ansprüche 1 bis 4, **dadurch gekennzeichnet, dass** der mindestens einen Längsrippe (27, 28) eine mit Bezug auf die Halbkreislinie (29) zurückgesetzte Längsrinnenanordnung (30, 31) zur Aufnahme des beim Eintreiben verdrängten Längsrippenmaterials benachbart ist.

6. Verbindungszapfen nach einem der Ansprüche 1 bis 5, **dadurch gekennzeichnet, dass** seine Schmalseiten (25, 26) im Querschnitt gesehen mit Ausnahme an der mindestens einen Längsrippe (27, 28) eine der Halbkreislinie (29) im Wesentlichen entsprechende Hüllkontur aufweisen.

7. Verbindungszapfen nach einem der Ansprüche 1 bis 6, **dadurch gekennzeichnet, dass** er an seinen Schmalseiten (25, 26) und/oder Breitseiten (23, 24) Vertiefungen (33, 34) zur Aufnahme von Leim oder dergleichen Verbindungsmittel aufweist.

8. Verbindungszapfen nach Anspruch 7, **dadurch gekennzeichnet, dass** die Vertiefungen von in Zapfen-Längsrichtung (a) verlaufenden, rinnenartigen Längsvertiefungen (33) gebildet werden.

9. Verbindungszapfen nach Anspruch 7 oder 8, **dadurch gekennzeichnet, dass** die an seinen Breitseiten (23, 24) angeordneten Vertiefungen von schräg zur Zapfen-Längsrichtung (a) verlaufenden, kanalartigen Schrägvertiefungen (34) gebildet werden.

10. Verbindungszapfen nach Anspruch 9, **dadurch gekennzeichnet, dass** er an seinen Schmalseiten (25, 26) Längsvertiefungen (33) und an seinen Breitseiten (23, 24) Schrägvertiefungen (34) aufweist und die Schrägvertiefungen (34) in die Längsvertiefungen (33) münden.

## Claims

1. Joining peg to create a mortise and tenon joint between two workpieces, for example two panel parts standing at right-angles to one another, wherein the joining peg has in cross-section an elongated shape with broad sides arranged parallel to one another, and narrow sides so contoured that it may be inserted into peg holes of the workpieces with an elongated cross-sectional shape which has broad sides arranged parallel to one another and semi-circular-shaped end sections, **characterised in that** the joining peg (21) has on at least one of its two narrow sides (25, 26) at least one longitudinal rib (27, 28) extending in the peg longitudinal direction (a) and which, viewed in cross-section, protrudes radially outwards over an imaginary semi-circular line (29) joining the two peg broad sides (23, 24) in such a way that the longitudinal rib or ribs (27, 28), when the joining peg (21) is driven into the respective peg hole (8 to 11, 13, to 16), is pressed under deformation of the longitudinal rib or ribs (27, 28) into the relevant semi-circular end section (19, 20) of the peg hole.

2. Joining peg according to claim 1, **characterised in that** in each case at least one longitudinal rib (27, 28) is provided on the two narrow sides (25, 26) of the joining peg (21).

3. Joining peg according to claim 1 or 2, **characterised in that** the longitudinal rib or ribs (27, 28) forms or form a mirror-symmetrical longitudinal rib arrangement towards the centre plane (32) of the joining peg (21) running centrally between the two broad sides (23, 24) of the joining peg (21).

4. Joining peg according to claim 3, **characterised in that** a centrally arranged longitudinal rib (27, 28) is provided on at least one of the two narrow sides (25, 26) of the joining peg (21), preferably on both narrow sides.

5. Joining peg according to any of claims 1 to 4, **characterised in that** the longitudinal rib or ribs (27, 28) is or are adjacent to a longitudinal groove arrangement (30, 31), recessed relative to the semi-circular line (29), for accommodating the longitudinal rib material which is compressed during driving in.

6. Joining peg according to any of claims 1 to 5, **characterised in that** its narrow sides (25, 26) viewed in cross-section, apart from the longitudinal rib or ribs (27, 28), have an enveloping contour corresponding substantially to the semi-circular line (29).

7. Joining peg according to any of claims 1 to 6, **characterised in that** it has on its narrow sides (25, 26) and/or broad sides (23, 24) recesses (33, 34) to hold glue or similar joining means.

8. Joining peg according to claim 7, **characterised in that** the recesses are formed by groove-like longitudinal recesses (33) running in the peg longitudinal direction (a).

9. Joining peg according to claim 7 or 8, **characterised in that** the recesses located on its broad sides (23, 24) are formed by channel-like diagonal recesses (34) running at an angle to the peg longitudinal direction (a).

10. Joining peg according to claim 9, **characterised in that** it has longitudinal recesses (33) on its narrow sides (25, 26) and diagonal recesses (34) on its broad sides (23, 24), and the diagonal recesses (34) lead into the longitudinal recesses (33).

## Revendications

1. Tenon d'assemblage pour l'établissement d'un assemblage à tenon entre deux pièces à usiner, par exemple deux éléments de plaque se trouvant à angle droit l'un par rapport à l'autre, sachant que la section transversale du tenon d'assemblage présente une forme oblongue avec des côtés larges disposés parallèlement l'un à l'autre et des petits côtés présentant un tel contour qu'il peut être enfiché dans des trous pour tenon des pièces à usiner avec une forme de section transversale oblongue, présentant des côtés larges disposés parallèlement l'un à l'autre et des sections d'extrémité semi-circulaires, **caractérisé en ce que** le tenon d'assemblage (21) présente sur au moins l'un de ses deux petits côtés (25, 26), au moins une nervure longitudinale (27, 28) s'étendant dans le sens longitudinal du tenon (a), qui dépasse en section transversale d'une ligne de demi-cercle (29) imaginaire, reliant les deux côtés larges du tenon (23, 24) vers l'extérieur dans le sens radial de telle manière qu'au moins une nervure longitudinale (27, 28) soit pressée lors de l'enfoncement du tenon d'assemblage (21) dans le trou pour tenon respectif (8 à 11, 13 à 16) en déformant au moins une nervure longitudinale (27, 28) dans la section d'extrémité (19, 20) semi-circulaire concernée du trou pour tenon.

2. Tenon d'assemblage selon la revendication 1, **caractérisé en ce que** respectivement au moins une nervure longitudinale (27, 28) est disposée sur les deux petits côtés (25, 26) du tenon d'assemblage (21).

3. Tenon d'assemblage selon la revendication 1 ou 2, **caractérisé en ce qu'**au moins une nervure longitudinale (27, 28) forme un ensemble de nervure longitudinale symétrique par rapport au plan médian (32) du tenon d'assemblage (21), s'étendant au milieu entre les deux côtés larges (23, 24) du tenon d'assemblage (21).

4. Tenon d'assemblage selon la revendication 3, **caractérisé en ce qu'**une nervure longitudinale (27, 28) disposée au milieu est présente sur au moins l'un des deux petits côtés (25, 26) du tenon d'assemblage (21), de manière appropriée sur les deux petits côtés.

5. Tenon d'assemblage selon l'une quelconque des revendications 1 à 4, **caractérisé en ce qu'**à la dite au moins une nervure longitudinale (27, 28) est contigu un ensemble de nervure longitudinale (30, 31) en retrait par rapport à la ligne de demi-cercle (29) pour la réception du matériau de nervure longitudinale déplacé lors de l'enfoncement.

6. Tenon d'assemblage selon l'une quelconque des revendications 1 à 5, **caractérisé en ce que** ses petits côtés (25, 26) présentent en section transversale, sauf sur au moins une nervure longitudinale (27, 28), un contour enveloppant correspondant essentiellement à la ligne de demi-cercle (29).

7. Tenon d'assemblage selon l'une quelconque des revendications 1 à 6, **caractérisé en ce qu'**il présente, sur ses petits côtés (25, 26) et/ou côtés larges (23, 24), des cavités (33, 34) pour la réception de colle ou moyen de liaison similaire.

8. Tenon d'assemblage selon la revendication 7, **caractérisé en ce que** les cavités sont constituées de cavités longitudinales (33) de type rainure, s'étendant dans le sens longitudinal du tenon (a).

9. Tenon d'assemblage selon la revendication 7 ou 8, **caractérisé en ce que** les cavités disposées sur ses côtés larges (23, 24) sont constituées de cavités obliques (34) de type canal, s'étendant en biais par rapport au sens longitudinal du tenon (a).

10. Tenon d'assemblage selon la revendication 9, **caractérisé en ce qu'**il présente, sur ses petits côtés (25, 26), des cavités longitudinales (33) et sur ses côtés larges (23, 24), des cavités obliques (34) et **en ce que** les cavités obliquent (34) débouchent dans les cavités longitudinales (33).
